# EUROPÄISCHE PATENTSCHRIFT

(11) **EP 3 988 787 B1**
(45) Veröffentlichungstag und Bekanntmachung des Hinweises auf die Patenterteilung: **01.01.2025**
(21) Anmeldenummer: 20203837.8
(22) Anmeldetag: 26.10.2020
(51) Int. Cl.: F16K 17/04, F16K 37/00, F16K 47/08, F04B 49/03, F04B 49/08, F04B 49/22, F04B 49/24

(54) **DRUCKABSCHALTVENTIL FÜR EINEN HOCHDRUCKREINIGER UND HOCHDRUCKREINIGER MIT EINEM DRUCKABSCHALTVENTIL**
PRESSURE SHUT-OFF VALVE FOR HIGH-PRESSURE CLEANER AND HIGH-PRESSURE CLEANER HAVING A PRESSURE SHUT-OFF VALVE
SOUPAPE DE COUPURE DE PRESSION POUR UN NETTOYEUR HAUTE PRESSION ET NETTOYEUR HAUTE PRESSION DOTÉ D'UNE SOUPAPE DE COUPURE DE PRESSION

(43) Veröffentlichungstag der Anmeldung: 27.04.2022
(73) Patentinhaber: Andreas Stihl AG & Co. KG, 71336 Waiblingen (DE)
(72) Erfinder: KAUPP, Klaus, 70329 Stuttgart (DE); SCHLANDERER, Sefan, 71394 Kernen (DE)
(74) Vertreter: Karzel, Philipp

(56) Entgegenhaltungen:
- DE-A1- 102005 007 141
- DE-C1- 19 548 497
- GB-A- 2 054 757
- US-A1- 2013 306 166

## Beschreibung

Die Erfindung betrifft ein Druckabschaltventil für einen Hochdruckreiniger gemäß dem Oberbegriff des Anspruchs 1 und einen Hochdruckreiniger mit einem solchen Druckabschaltventil.

Hochdruckreiniger dienen dazu, eine Reinigungsflüssigkeit, insbesondere Wasser, unter Druck zu setzen, und diese anschließend über einen Spritzaufsatz, beispielsweise eine Lanze mit Düsenkopf, auszustoßen und Gegenstände mit dem Flüssigkeitsstrahl zu reinigen. Zur Erzeugung des Druckes umfasst der Hochdruckreiniger eine Pumpe, die an ihrem Einlass mit einer Ansaugleitung und an ihrem Auslass mit einer Druckleitung verbunden ist. Über die Ansaugleitung wird der Pumpe Flüssigkeit zugeführt. Diese wird durch die Pumpe unter Druck gesetzt und aus dem Auslass der Pumpe in die Druckleitung überführt. Ist der Spritzaufsatz geöffnet, strömt die Flüssigkeit unter hohem Druck aus dem Spritzaufsatz aus. Ist der Spritzaufsatz geschlossen, ist zur Reduzierung der mechanischen Belastung die Pumpe zu deaktivieren. Hierfür ist ein Druckabschaltventil vorgesehen, das bei Überschreitung eines Grenzdruckes einen Schalter zur Deaktivierung der Pumpe betätigt.

Das Dokument US2013/306166 A1 offenbart ein Druckabschaltventil nach dem Oberbegriff des Anspruchs 1.

Nachteilig an derartigen Druckabschaltventilen ist, dass die Druckabschaltventile nicht zuverlässig schalten und zugleich hohe Herstellungskosten aufweisen.

Demnach liegt der Erfindung die Aufgabe zugrunde, ein Druckabschaltventil der gattungsmäßen Art derart weiterzuentwickeln, dass die Robustheit des Druckabschaltventils erhöht ist und zugleich dessen Herstellungskosten reduziert sind.

Diese Aufgabe wird durch ein Druckabschaltventil nach Anspruch 1 gelöst.

Der Erfindung liegt die weitere Aufgabe zugrunde, einen Hochdruckreiniger mit einem Druckabschaltventil derart weiterzuentwickeln, dass die Robustheit des Hochdruckreinigers erhöht ist und zugleich die Herstellungskosten des Hochdruckreinigers reduziert sind.

Diese Aufgabe wird durch ein Druckabschaltventil nach Anspruch 15 gelöst.

Das Druckabschaltventil für einen Hochdruckreiniger umfasst ein Ventilgehäuse mit einem Ventilsitz, mindestens einen Einlass zum Zuführen einer Flüssigkeit, mindestens einen Auslass zum Abführen der Flüssigkeit und einen Ventilkörper mit einer Längsachse. Der Ventilkörper weist ein dem Ventilsitz zugeordnetes Ventilglied auf, wobei in einer ersten Schließstellung des Druckabschaltventils der Ventilsitz durch das Ventilglied verschlossen ist und die Strömungsverbindung zwischen dem Einlass und dem Auslass unterbrochen ist. Das Druckabschaltventil weist zwischen dem Ventilgehäuse und dem Ventilkörper einen effektiven Drosselspalt mit einer in Richtung der Längsachse des Ventilkörpers gemessenen Gesamtlänge auf, wobei der effektive Drosselspalt Teil der Strömungsverbindung zwischen dem Einlass und dem Auslass ist. Der Ventilkörper weist einen sich radial zur Längsachse erstreckenden, maximalen Durchmesser auf. Die Gesamtlänge des effektiven Drosselspalts beträgt in der ersten Schließstellung des Druckabschaltventils mindestens 50% des maximalen Durchmessers des Ventilkörpers.

Der Erfindung liegt die Erkenntnis zugrunde, dass die mangelnde Zuverlässigkeit herkömmlicher Druckabschaltventile auf ein Verstopfen des Drosselspaltes zurückzuführen ist. Kleinste Partikel in der Flüssigkeit setzen sich im Druckabschaltventil fest, vorzugsweise an den engsten Stellen, nämlich dem Drosselspalt. Diese Partikel sammeln sich am Drosselspalt an, wodurch die Flüssigkeit nicht mehr ungehindert entlang des Drosselspaltes strömen kann. Dadurch werden die Schalteigenschaften des Ventils geändert.

Durch die Ausbildung eines besonders langen, effektiven Drosselspaltes zwischen dem Ventilkörper und dem Ventilgehäuse wird der Strömungswiderstand der Flüssigkeit durch das Druckabschaltventil erhöht, wodurch wiederum eine erhöhte Spalthöhe des Drosselspalts, die den Strömungswiderstand reduziert, vorgesehen sein kann. Feinste Partikel setzen sich nicht mehr am Drosselspalt fest, sondern werden mit der Flüssigkeit ausgespült. Damit ist eine hohe Robustheit des Druckabschaltventils gewährleistet. Durch eine vergleichsweise hohe Spalthöhe des Drosselspaltes können höhere Fertigungstoleranzen vorgesehen sein. Somit werden Kunststoffe für den Ventilkörper oder das Ventilgehäuse eingesetzt. Es kann sogar auf Nacharbeitsschritte in der Fertigung der Bauelemente verzichtet werden, wodurch die Herstellungskosten des Druckabschaltventils und damit auch des Hochdruckreinigers reduziert werden können.

Es ist vorteilhaft vorgesehen, dass der effektive Drosselspalt eine radial zur Längsachse des Ventilkörpers gemessene Spalthöhe besitzt, wobei die Spalthöhe höchstens 0,25 mm, insbesondere höchstens 0,2 mm beträgt. Es ist insbesondere vorgesehen, dass die Spalthöhe mindestens 0,05 mm, insbesondere mindestens 0,1 mm beträgt. Somit ist die Spalthöhe klein genug, um einen ausreichend großen Strömungswiderstand zu erzeugen. Zudem ist die Spalthöhe groß genug, um eine Festsetzung von kleinen Partikeln am Drosselspalt zu vermeiden.

Es ist vorzugsweise vorgesehen, dass der effektive Drosselspalt einen ersten Drosselspalt mit einem ersten Durchmesser und einen zweiten Drosselspalt mit einem zweiten Durchmesser umfasst. Zwischen dem ersten Drosselspalt und dem zweiten Drosselspalt ist zwischen dem Ventilkörper und dem Ventilgehäuse vorzugsweise eine Überströmungskammer vorgesehen. Erreicht der Druck in der Druckleitung einen Grenzdruck, wird der Ventilkörper in einer zweiten Schließstellung des Druckabschaltventils gegen ein Schaltelement gedrückt, das die Pumpe deaktiviert. In dieser zweiten Schließstellung ist die Strömungsverbindung durch eine am zweiten Drosselspalt anliegende Dichtung gesperrt. Da insbesondere die Pumpe, aber auch das gesamte Hydrauliksystem der Massenträgheit unterliegen, nimmt der Druck an der Druckleitung weiter zu. Folglich wird der Ventilkörper aus der zweiten Schließstellung weiter in Richtung der Längsachse zum Schaltelement hin geschoben. Hat der zweite Drosselspalt die Dichtung überfahren, liegt in einer Überdruckstellung des Druckabschaltventils die Überströmungskammer auf Höhe der Dichtung. In dieser Überdruckstellung ist die Strömungsverbindung zwischen dem Einlass und dem Auslass des Druckabschaltventils wieder hergestellt, wodurch die Flüssigkeit über die Überströmungskammer an der Dichtung vorbeiströmen kann. Dadurch werden Überdrücke an der Druckleitung und mechanische Belastungsspitzen, die auf das gesamte Hydrauliksystem wirken würden, abgebaut.

Der erste Durchmesser des ersten Drosselspaltes ist vorzugsweise kleiner als der zweite Durchmesser des zweiten Drosselspaltes. Demnach weisen in einer bevorzugten Ausführung des Druckabschaltventils der erste Drosselspalt und der zweite Drosselspalt verschieden große Durchmesser auf. Die Überströmungskammer wird somit durch eine erste Schulter am Ventilgehäuse und eine zweite Schulter am Ventilkörper begrenzt.

In einer alternativen, ebenfalls erfindungsgemäßen Ausbildung des Druckabschaltventils entspricht der erste Durchmesser des ersten Drosselspaltes in etwa dem zweiten Durchmesser des zweiten Drosselspaltes. In dieser Ausgestaltung wird die Überströmungskammer durch einen Freistich zwischen dem ersten Drosselspalt und dem zweiten Drosselspalt gebildet.

Es ist vorteilhaft vorgesehen, dass der Ventilkörper einen sich in Richtung der Längsachse verjüngenden Abschnitt aufweist, der sich in der ersten Schließstellung an einem von dem ersten Drosselspalt abgewandten Ende des zweiten Drosselspaltes anschließt. Durch den konischen Abschnitt des Ventilkörpers steht die Dichtung nicht mit scharfen Kanten des Ventilkörpers in Kontakt, wodurch die Dichtung beim Überfahren durch den Ventilkörper geschont wird.

Das Ventilglied des Ventilkörpers ist in Richtung zum Ventilsitz des Ventilgehäuses insbesondere konisch ausgebildet ist. Dadurch sind Ventilkörper und Ventilgehäuse in der Schließstellung zentriert.

Es ist vorteilhaft vorgesehen, dass das Druckabschaltventil ein auf den Ventilkörper wirkendes Federelement umfasst, wobei das Federelement den Ventilkörper gegen den Ventilsitz des Ventilgehäuses spannt. Über die Auslegung des Federelementes können die Grenzdrücke definiert werden, bei welchen das Druckabschaltventil die entsprechenden Stellungen einnimmt.

Es ist vorteilhaft vorgesehen, dass das Druckabschaltventil eine Offenstellung, eine zweite Schließstellung und eine Überdruckstellung aufweist, wobei in der Überdruckstellung der Einlass und der Auslass des Ventilgehäuses strömungsverbunden sind. Durch die Strömungsverbindung zwischen Einlass und Auslass des Ventilgehäuses erfolgt, wie oben beschrieben, ein Druckausgleich zwischen der Hochdruckleitung und der Ansaugleitung, um die Belastungsspitzen in der Hochdruckleitung sowie an der Pumpe zu senken.

Es ist insbesondere vorgesehen, dass das Druckabschaltventil derart ausgebildet ist, dass bei Überdruck am Einlass des Ventilgehäuses der Ventilkörper entlang der Längsachse in Richtung weg vom Einlass gedrückt wird, wodurch das Druckabschaltventil von der zweiten Schließstellung in die Überdruckstellung übergeht. Demnach folgt die Überdruckstellung unmittelbar nach der zweiten Schließstellung. Hat der Druckausgleich zwischen der Hochdruckleitung und der Ansaugleitung stattgefunden, wird der Ventilkörper wieder zurück in Richtung Einlass geschoben. Dabei geht das Druckabschaltventil von der Überdruckstellung wieder in die zweite Schließstellung über.

Es ist bevorzugt vorgesehen, dass das Druckabschaltventil einen in Richtung der Längsachse gemessenen maximalen Ventilweg aufweist, den der Ventilkörper von der ersten Schließstellung bis zur Überdruckstellung zurücklegt, und dass der Ventilweg des Ventilkörpers kleiner als die Gesamtlänge des effektiven Drosselspaltes ist. Durch diese Ausgestaltung des Druckabschaltventils ist es nicht notwendig, dass beim Übergang von der zweiten Schließstellung in die Überdruckstellung der Ventilkörper über die Gesamtlänge des effektiven Drosselspaltes verschoben werden muss. Es ist bereits ausreichend, den Ventilkörper so weit in Richtung weg vom Einlass des Ventilgehäuses zu verschieben, dass die Überströmkammer auf Höhe der Dichtung liegt, wodurch eine Strömungsverbindung zwischen Einlass und Auslass hergestellt ist. Dadurch ist der maximale Ventilweg gering, wodurch der Bauraum des Druckabschaltventils kompakt gehalten werden kann. Der maximale Ventilweg des Ventilkörpers entspricht vorzugsweise höchstens 90%, insbesondere höchstens 80%, vorzugsweise in etwa 75% der Gesamtlänge des effektiven Drosselspaltes.

Der Ventilkörper besteht vorzugsweise aus Polyoxymethylen (POM). Das Ventilgehäuse besteht insbesondere aus Polyoxymethylen (POM). Durch den Einsatz derartiger Kunststoffe können die Herstellungskosten des Druckabschaltventils reduziert werden.

Weitere Merkmale der Erfindung ergeben sich aus der Beschreibung und der Zeichnung, in der ein nachfolgend im Einzelnen beschriebenes Ausführungsbeispiel der Erfindung dargestellt ist. Es zeigen:
- Fig. 1: in perspektivischer, schematischer Darstellung einen Hochdruckreiniger,
- Fig. 2: in perspektivischer, geschnittener Darstellung den Hochdruckreiniger mit Druckabschaltventil nach Fig. 1,
- Fig. 3: in schematischer Darstellung die Funktion der Hydraulikeinheit in erster Schließstellung,
- Fig. 4: in schematischer Darstellung die Funktion der Hydraulikeinheit in Überdruckstellung,
- Fig. 5: in schematischer Darstellung die Funktion der Hydraulikeinheit in zweiter Schließstellung,
- Fig. 6: in einer Schnittdarstellung das erfindungsgemäße Druckabschaltventil in erster Schließstellung,
- Fig. 7: in einer Schnittdarstellung das Druckabschaltventil nach Fig. 6 mit Pumpe in der ersten Schließstellung,
- Fig. 8: in einer Schnittdarstellung das Druckabschaltventil nach Fig. 6 mit Pumpe in der zweiten Schließstellung,
- Fig. 9: in einer Schnittdarstellung das Druckabschaltventil nach Fig. 6 mit Pumpe in der Überdruckstellung und
- Fig. 10: in einer Schnittdarstellung eine weitere Ausführung des erfindungsgemäßen Druckabschaltventils mit gleichen Durchmessern der Drosselspalte.

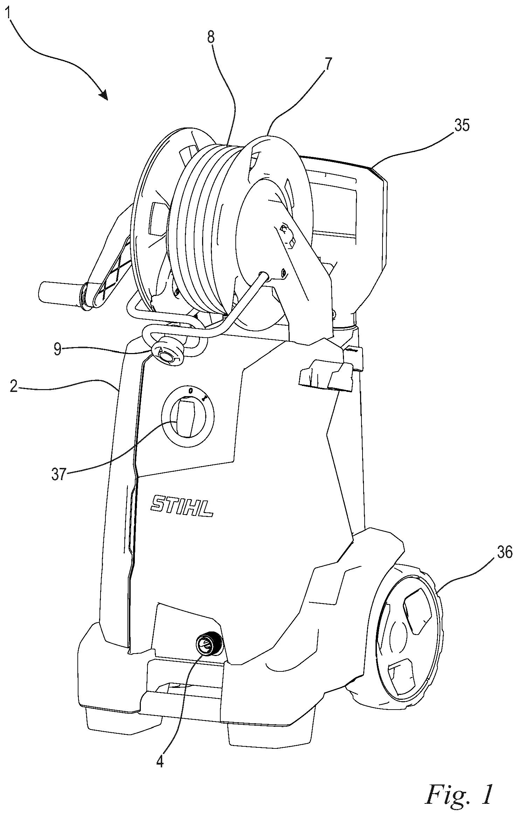

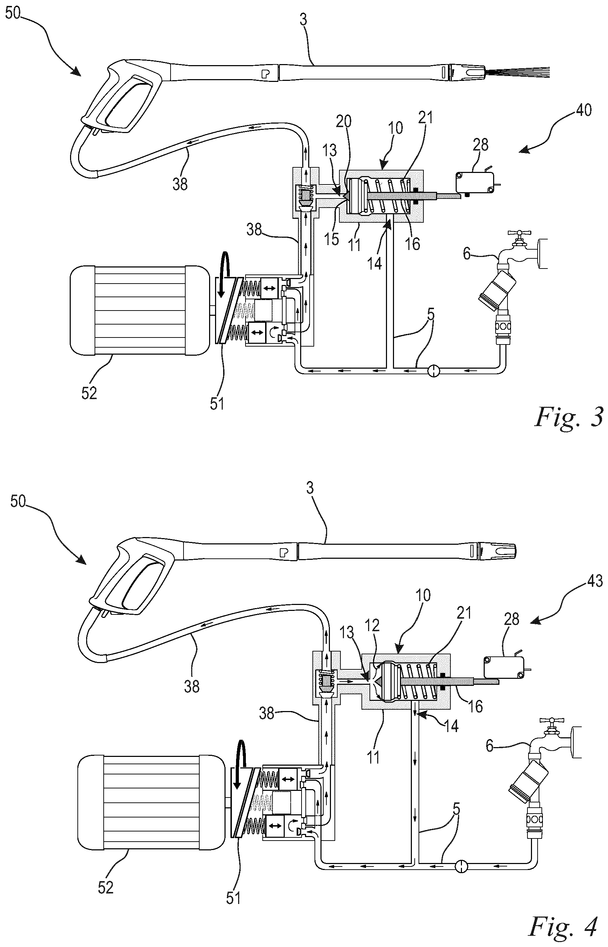

Fig. 1 zeigt eine schematische Darstellung einer Ausführung des erfindungsgemäßen Hochdruckreinigers 1. Der Hochdruckreiniger 1 umfasst ein Gehäuse 2, das einzelne Systemkomponenten einer Hydraulikeinheit 50 (Fig. 3 bis 5) umgibt und diese beispielsweise vor Spritzwasser schützt. An dem Gehäuse 2 ist ein Niederdruckanschluss 4 vorgesehen, über welchen eine Ansaugleitung 5 (Fig. 3 bis 5) des Hochdruckreinigers 1 mit einem externen Flüssigkeitsanschluss 6 (Fig. 3 bis 5), insbesondere mit einem Wasseranschluss, verbindbar ist. Demnach wird dem Hochdruckreiniger 1 in dessen Betrieb über den Niederdruckanschluss 4 eine Reinigungsflüssigkeit zugeführt. Die Reinigungsflüssigkeit ist vorzugsweise Wasser. Es können auch andere Flüssigkeiten, beispielsweise Wasser versetzt mit einem Reinigungsmittel, als Reinigungsflüssigkeit vorgesehen sein. Auf dem Gehäuse 2 des Hochdruckreinigers 1 ist eine Schlauchtrommel 7 vorgesehen. Auf der Schlauchtrommel 7 ist ein Hochdruckschlauch 8 aufgewickelt. Der Hochdruckschlauch 8 ist an seinem einen Ende mit einer Hochdruckleitung 38 (Figuren 3 bis 5) des Hochdruckreinigers 1 verbunden. An dem anderen Ende des Hochdruckschlauchs 8 ist ein Druckanschluss 9 vorgesehen, an dem ein Spritzaufsatz 3 (Figuren 3 bis 5), beispielsweise eine Spritzpistole mit einem Düsenkopf, anschließbar ist.

Wie in Fig. 1 gezeigt, umfasst der Hochdruckreiniger 1 einen Betätigungsschalter 37, mittels dessen der Hochdruckreiniger 1, insbesondere dessen Hydraulikeinheit 50, an- und ausgeschaltet werden kann. Zudem ist auf der Oberseite des Gehäuses 2 ein Haltegriff 35 vorgesehen. Der Hochdruckreiniger 1 kann an seinem Haltegriff 35 angehoben, insbesondere getragen oder über seine an der Unterseite des Gehäuses 2 angeordneten Räder 36 gezogen werden.

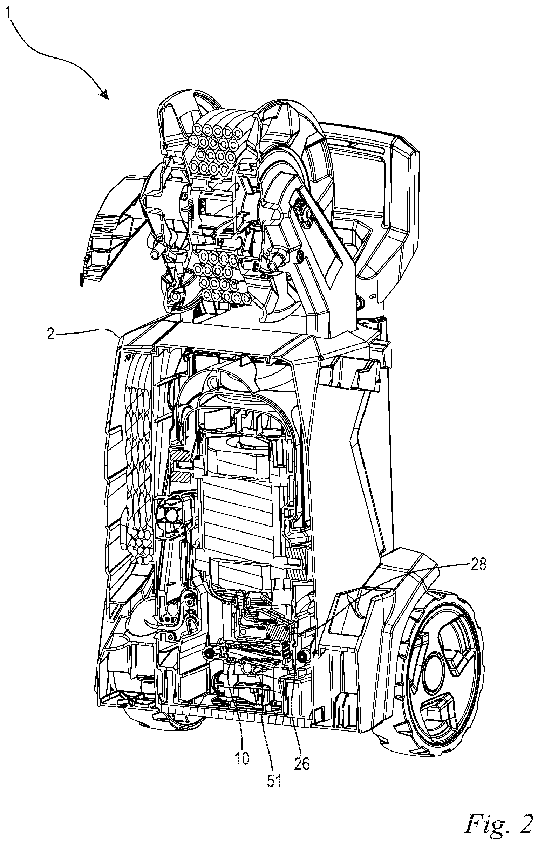

Wie in Fig. 2 gezeigt, umfasst der Hochdruckreiniger 1 eine Pumpe 51, die durch einen Antriebsmotor 52 (Fig. 3 bis 5) angetrieben ist. Der Antriebsmotor 52 ist im Ausführungsbeispiel als Elektromotor ausgebildet. In einer alternativen Ausführung des Hochdruckreinigers 1 kann der Antriebsmotor 52 auch als Verbrennungsmotor ausgebildet sein. An der Pumpe 51 ist ein Druckabschaltventil 10 vorgesehen, welches wie die Pumpe 51 ein Teil der Hydraulikeinheit 50 ist. Benachbart zum Druckabschaltventil 10 sind ein Schaltelement 26 und ein Schalter 28 vorgesehen. Das Druckabschaltventil 10 ist über das Schaltelement 26 mit dem Schalter 28 vorzugsweise mechanisch wirkverbunden. Wirkt das Druckabschaltventil 10 auf das Schaltelement 26, betätigt dieses den Schalter 28. Der Schalter 28 aktiviert oder deaktiviert den Antriebsmotor 52 der Pumpe 51.

Nachfolgend ist die Funktionsweise der Hydraulikeinheit 50 des Hochdruckreinigers 1 beschrieben, die in den Figuren 3 bis 5 schematisch dargestellt ist:
Die Hydraulikeinheit 50 umfasst die Pumpe 51 mit dem Antriebsmotor 52, die Ansaugleitung 5, die Hochdruckleitung 38, den Spritzaufsatz 3 und das Druckabschaltventil 10. Die Ansaugleitung 5 ist mit dem Flüssigkeitsanschluss 6 verbunden, der im bevorzugten Ausführungsbeispiel als ein Wasseranschluss ausgebildet ist. Die Flüssigkeit strömt von dem Flüssigkeitsanschluss 6 über die Ansaugleitung 5 zur Pumpe 51. Treibt der Antriebsmotor 52 die Pumpe 51 an, fördert die Pumpe 51 die Flüssigkeit über die Hochdruckleitung 38 zum Spritzaufsatz 3. Wird der Spritzaufsatz 3 durch den Bediener betätigt, strömt aus dem Düsenkopf des Spritzaufsatzes 3 die Flüssigkeit in hoher Geschwindigkeit aus. Die Hochdruckleitung 38 ist mit der Ansaugleitung 5 über das Druckabschaltventil 10 strömungsverbunden.

Wie in Fig. 3 gezeigt, umfasst das Druckabschaltventil 10 ein Ventilgehäuse 11, einen im Ventilgehäuse 11 linear beweglichen Ventilkörper 16, einen Einlass 13 zum Zuführen von Flüssigkeit und einen Auslass 14 zum Abführen von Flüssigkeit. Der Einlass 13 des Druckabschaltventils 10 ist an der Hochdruckleitung 38, der Auslass 14 des Druckabschaltventils 10 an der Ansaugleitung 5 angeschlossen. Das Druckabschaltventil 10 weist zwischen dem Einlass 13 und dem Auslass 14 des Druckabschaltventils 10 eine Strömungsverbindung 12 auf (Fig. 4). Das Druckabschaltventil 10 umfasst einen Ventilsitz 15 und ein dem Ventilsitz 15 zugeordnetes Ventilglied 20. Im Ausführungsbeispiel ist der Ventilsitz 15 an dem Ventilgehäuse 11 ausgebildet. Das Ventilglied 20 ist vorzugsweise an dem Ventilkörper 16 ausgebildet. Ferner umfasst das Druckabschaltventil 10 ein Federelement 21, das auf den Ventilkörper 16 wirkt und das Ventilglied 20 in Richtung zum Ventilsitz 15 drückt.

In Fig. 3 ist die Hydraulikeinheit 50 mit geöffnetem Spritzaufsatz 3 dargestellt. Bei geöffnetem Spritzaufsatz 3 baut sich der Druck in der Hochdruckleitung 38 ab. Das Ventilglied 20 wird durch das Federelement 21 auf den Ventilsitz 15 gedrückt. Das Druckabschaltventil 10 ist in einer ersten Schließstellung 40. Der Ventilkörper 16 gibt den Schalter 28 frei, wodurch der Antriebsmotor 52 der Pumpe 51 aktiviert ist. Die Flüssigkeit wird von der Pumpe 51 über die Hochdruckleitung 38 zum Düsenkopf des Spritzaufsatzes 3 geleitet, aus dem diese mit hoher Geschwindigkeit austritt.

In Fig. 4 ist das Hydrauliksystem 50 mit geschlossenem Spritzaufsatz 3 gezeigt. Wird der Spritzaufsatz 3 bei laufendem Antriebsmotor 52 geschlossen, entsteht in der Hochdruckleitung 38 ein Überdruck. Dieser Überdruck bewirkt am Einlass des Druckabschaltventils 10 eine Druckkraft auf den Ventilkörper 16, wodurch dieser entgegen der Federkraft des Federelementes 21 in Richtung des Schalters 28 gedrückt wird. Der Schalter 28 wird durch den Ventilkörper 16 betätigt, wodurch der Antriebsmotor 52 deaktiviert wird. Der Überdruck übt zudem eine derart hohe Druckkraft auf den Ventilkörper 16 aus, dass dieser in eine Überdruckstellung 43 übergeht, in der Einlass 13 und Auslass 14 des Druckabschaltventils 10 strömungsverbunden sind. Es erfolgt ein Druckausgleich zwischen der Hochdruckleitung 38 und der Ansaugleitung 5, wodurch insbesondere die mechanischen Belastungen, die auf die Hochdruckleitung 38, die Pumpe 51 bzw. deren Hochdruckteile wirken, reduziert werden.

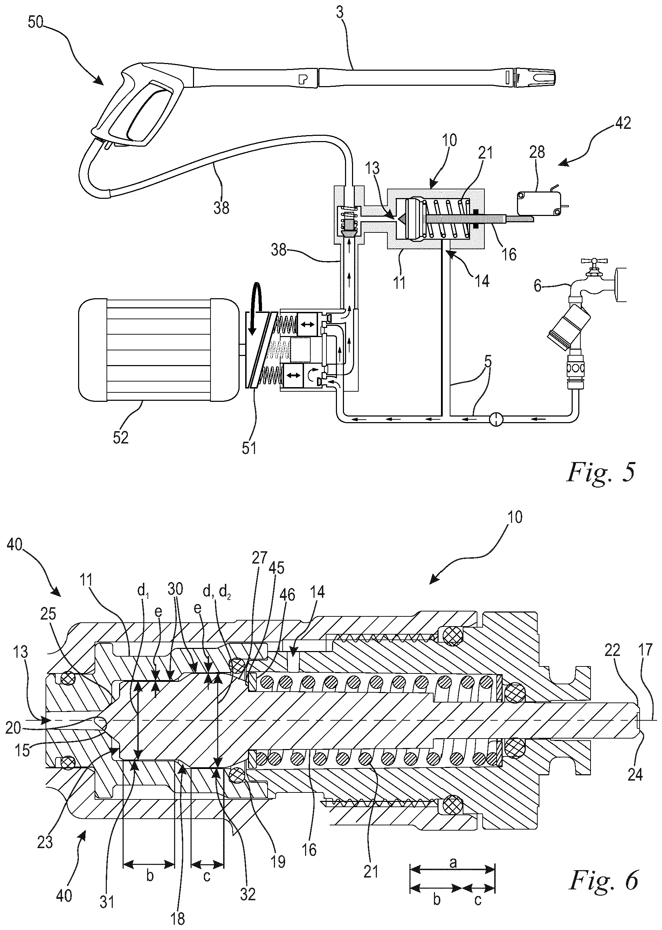

In Fig. 5 ist das Hydrauliksystem 50 mit geschlossenem Spritzaufsatz 3 gezeigt, wobei sich das Druckabschaltventil 10 in der zweiten Schließstellung 42 bei deaktiviertem Antriebsmotor 52 befindet. In der zweiten Schließstellung 42 sind Einlass 13 und Auslass 14 des Druckabschaltventils 10 nicht mehr strömungsverbunden. Der auf der Hochdruckleitung 38 noch bestehende Druck bewirkt eine Druckkraft, die im Gleichgewicht mit der Federkraft des Federelementes steht. Das Federelement 21 ist dabei so ausgelegt, dass der Ventilkörper 16 derart ausgelenkt ist, dass die Strömungsverbindung 12 zwischen Einlass 13 und Auslass 14 des Druckabschaltventils 10 unterbrochen ist, der Schalter 28 jedoch durch den Ventilkörper 16 aktiviert ist. Erst mit Aktivierung des Spritzaufsatzes 3, wie in Fig. 3 gezeigt, fällt der Druck an der Hochdruckleitung 38 wieder ausreichend ab, wodurch der Ventilkörper 16 in die erste Schließstellung 40 rückt und den Schalter 28 wieder freigibt.

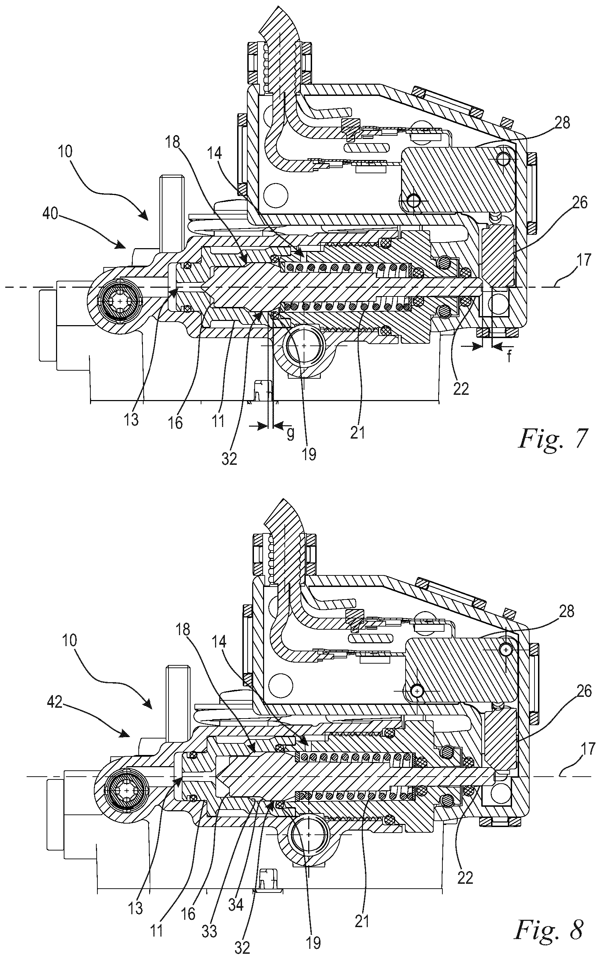

In Fig. 6 ist in einer Schnittdarstellung das erfindungsgemäße Druckabschaltventil 10 in der ersten Schließstellung 40 gezeigt. Der Ventilkörper 16 ist im bevorzugten Ausführungsbeispiel als ein Kolben ausgebildet. Der Ventilkörper 16 besitzt eine Längsachse 17 und ist im Ventilgehäuse 11 in Richtung seiner Längsachse 17 beweglich gelagert. Der Ventilkörper 16 umfasst an seinem dem Einlass 13 des Druckabschaltventils 10 zugewandten Ende einen Kolbenkopf 23 und an seinem dem Einlass 13 des Druckabschaltventils 10 abgewandten Ende einen Kolbenfuß 22. Der Kolbenfuß 22 dient dazu, das Schaltelement 26 zu betätigen (Fig. 7 bis 10).

Wie in Fig. 6 gezeigt, umfasst das Druckabschaltventil 10 einen ersten Drosselspalt 31 und einen zweiten Drosselspalt 32. Die Drosselspalte 31, 32 sind zwischen dem Ventilgehäuse 11 und dem Ventilkörper 16 ausgebildet. Die Drosselspalte 31, 32 sind Teil der Strömungsverbindung 12 und liegen zwischen dem Einlass 13 und dem Auslass 14 des Druckabschaltventils 10. Der erste Drosselspalt 31 liegt stromaufwärts vorzugsweise näher am Einlass als der zweite Drosselspalt 32. Die Drosselspalte 31, 32 sind in Reihe zueinander angeordnet. Der erste Drosselspalt 31 weist eine in Richtung der Längsachse 17 gemessene Spaltlänge b auf. Der zweite Drosselspalt 32 weist eine in Richtung der Längsachse 17 gemessene Spaltlänge c auf. Der erste Drosselspalt 31 und der zweite Drosselspalt 32 bilden zusammen einen effektiven Drosselspalt 30. Der effektive Drosselspalt 30 weist eine Spaltlänge a auf, wobei die Spaltlänge a der Summe aus der Spaltlänge b des ersten Drosselspaltes 31 und der Spaltlänge c des zweiten Drosselspaltes 32 entspricht. Die Drosselspalte 31, 32 sind am Kolbenkopf 23 des Ventilkörpers 16 ausgebildet.

Wie in Fig. 6 gezeigt, erstrecken sich im bevorzugten Ausführungsbeispiel der erste Drosselspalt 31 und der zweite Drosselspalt 32 lediglich über im Wesentlichen zylindrische Abschnitte des Ventilkörpers 16 und des Ventilgehäuses 11. Das Ventilgehäuse 11 weist entlang der Drosselspalte 31, 32 aus fertigungstechnischen Gründen eine geringfügige Entformungsschräge gegenüber der Längsachse 17 auf. Im Wesentlichen zylindrisch ist derart zu verstehen, dass der mit der Längsachse 17 des Ventilkörpers 16 geschlossene Winkel nicht größer als 2° ist. Der erste Drosselspalt 31 und der zweite Drosselspalt 32 weisen jeweils eine radial zur Längsachse 17 gemessene Spalthöhe e auf. Die Spalthöhe e entspricht einer gemittelten Spalthöhe. Demnach errechnet sich die Spalthöhe aus der halben Differenz des Innendurchmessers des Ventilgehäuses 11 und des Außendurchmessers des Ventilkörpers 16. Diese sind mittig an den Drosselspalten 31, 32, wie in der Fig. 6 dargestellt, zu messen. Die Spalthöhe e des ersten Drosselspaltes 31 und des zweiten Drosselspaltes 32 ist vorzugsweise kleiner 0,25 mm, insbesondere kleiner 0,2 mm. Die Spalthöhe e des ersten Drosselspaltes 31 und des zweiten Drosselspaltes 32 ist bevorzugt größer 0,05 mm, insbesondere größer 0,1 mm. Im bevorzugten Ausführungsbeispiel sind die Spalthöhe e des ersten Drosselspaltes 31 und des zweiten Drosselspaltes 32 gleich. Es kann in einer alternativen Ausführung zweckmäßig sein, verschiedene Spalthöhen e für die Drosselspalte 31, 32 vorzusehen.

Wie in Fig. 6 gezeigt, besitzt der Ventilkörper 16 einen radial zur Längsachse 17 gemessenen, maximalen Durchmesser d. Die Gesamtlänge a des effektiven Drosselspaltes 30 beträgt in der Schließstellung 40 des Druckabschaltventils 10 mindestens 50%, insbesondere mindestens 65%, vorzugsweise in etwa 85% des maximalen Durchmessers d des Ventilkörpers 16. Der maximale Durchmesser d des Ventilkörpers ist vorzugsweise lediglich an einem der Drosselspalte 31, 32 zu messen. Durch die große Gesamtlänge a des effektiven Drosselspaltes 30 bleibt der Strömungswiderstand trotz der hohen Spalthöhe e der Drosselspalte 31, 32 ausreichend groß.

Wie in Fig. 6 gezeigt, besitzt der erste Drosselspalt 31 einen radial zur Längsachse 17 gemessenen ersten Durchmesser d₁. Der zweite Drosselspalt 32 besitzt einen radial zur Längsachse 17 gemessenen zweiten Durchmesser d₂. Die Durchmesser der Drosselspalte entsprechen den Außendurchmessern des Ventilkörpers 16 an den jeweiligen Drosselspalten 31, 32. Im Ausführungsbeispiel nach Fig. 6 ist der Durchmesser d₂ des zweiten Drosselspaltes 32 größer als der Durchmesser d₁ des ersten Drosselspaltes 31. Die verschiedenen Durchmesser di, d₂ der Drosselspalte 31, 32 bilden eine Überströmungskammer 18, die zwischen dem ersten Drosselspalt 31 und dem zweiten Drosselspalt 32 vorgesehen ist. Die Überströmungskammer 18 ist in Richtung der Längsachse 17 an ihrem dem Einlass 13 zugewandten Ende durch eine Gehäuseschulter 33 des Ventilgehäuses 11 und an ihrem dem Einlass 13 abgewandten Ende durch eine Kolbenschulter 34 des Ventilkörpers begrenzt (Fig. 8).

Wie in Fig. 6 gezeigt, ist an dem Ventilkörper 16 ein sich bezüglich der Längsachse 17 in Richtung vom Einlass 13 des Druckabschaltventils 10 weg verjüngender Abschnitt 27 ausgebildet. Der Abschnitt 27 schließt sich in der ersten Schließstellung des Druckabschaltventils 10 an dem vom Einlass 13 abgewandten Ende des zweiten Drosselspaltes 32 an. Der sich verjüngende Abschnitt 27 geht in eine sich radial zur Längsachse 17 erstreckende weitere Kolbenschulter 45 des Ventilköpers 16 über. An dieser Kolbenschulter 45 ist ein Stützring 46 vorgesehen, über welchen das Federelement 21 auf den Ventilkörper 16 wirkt. In der ersten Schließstellung 40 spannt das Federelement 21 den Ventilkörper 16 mit seinem konisch ausgebildeten Ventilglied 20 gegen den Ventilsitz 21 des Ventilgehäuses 11.

Wie in Fig. 6 gezeigt, umfasst das Druckabschaltventil 10 einen Dichtring 19. Der Dichtring 19 ist bevorzugt am Ventilgehäuse 11 gehalten. Der Dichtring ist vorzugsweise als ein O-Ring ausgebildet. In der ersten Schließstellung 40 des Druckabschaltventils 10 liegt der Dichtring 19 in Richtung der Längsachse 17 auf Höhe des sich verjüngenden Abschnitts 27 des Ventilkörpers 16. In der ersten Schließstellung 40 steht der Dichtring 19 mit dem Ventilkörper 16 nicht in Kontakt.

Der Ventilkörper und/oder das Ventilgehäuse bestehen aus Kunststoff, insbesondere aus Polyoxymethylen (POM). Die große Spalthöhe e der Drosselspalte 31, 32 und die Gesamtspaltlänge a des effektiven Drosselspaltes 30 lassen den Einsatz derartiger Werkstoffe zu, wodurch Herstellungskosten gesenkt werden können.

Nachfolgend ist anhand der Figuren 7 bis 9 die Funktion des erfindungsgemäßen Druckabschaltventils beschrieben:
In Fig. 7 ist das Druckabschaltventil 10 nach Fig. 6 eingebaut in der Pumpe 51 in seiner ersten Schließstellung 40 gezeigt. Das Ventilglied 20 des Ventilkörpers 16 liegt an dem Ventilsitz 15 des Ventilgehäuses 11 an. Die Strömungsverbindung 12 zwischen Einlass 13 und Auslass 14 des Druckabschaltventils 10 ist unterbrochen. Dieser Zustand liegt wie oben beschrieben vor, wenn der Spritzaufsatz 3 aktiviert ist und die Reinigungsflüssigkeit aus dem Spritzaufsatz 3 ausströmt. Das Federelement 21 ist dabei derart ausgelegt, dass auch bei Druckschwankungen an der Hochdruckleitung 38 das Ventilglied 20 des Ventilkörpers 16 gegen den Ventilsitz 15 des Ventilgehäuses 11 gedrückt ist und das Druckabschaltventil 10 in der ersten Schließstellung 40 verbleibt. Derartige Druckschwankungen können beispielsweise durch Strömungsimpulse der Pumpe 51 entstehen.

Wie in Fig. 7 gezeigt, kontaktiert der Ventilkörper 16 den Dichtring 19 in der ersten Schließstellung 40 nicht. Liegt eine Leckage zwischen Ventilsitz 15 und Ventilglied 20 vor, kann das Fluid über den effektiven Drosselspalt 30 an der Dichtung 19 vorbei vom Einlass 13 bis zum Auslass 14 des Ventilgehäuses 11 strömen. Die durch die Leckage verursachten, geringen Strömungen verursachen somit einlassseitig keine Druckerhöhung. Dadurch wird ein ungewolltes Schalten des Druckabschaltventils 10 durch Leckage vermieden. Eine derartige Leckage kann durch Fertigungstoleranzen, aber auch durch Verschleiß von Ventilsitz 15 und Ventilglied 20 entstehen.

Deaktiviert der Bediener den Spritzaufsatz 3, tritt aus diesem keine Reinigungsflüssigkeit mehr aus. Die Pumpe 51 wird durch den Antriebsmotor 52 weiter betrieben, wodurch der Druck an der Hochdruckleitung 28 weiter ansteigt. Aufgrund des erhöhten Druckes wirkt am Einlass 13 eine Druckkraft auf den Ventilkörper 16, die derart hoch ist, dass der Ventilkörper 16 in Richtung seiner Längsachse 17 weg vom Einlass 13 geschoben wird. Der Ventilsitz 15 wird von dem Ventilglied 20 freigegeben, wodurch eine Strömungsverbindung 12 zwischen dem Einlass 13 und dem Auslass 14 besteht. Das Druckabschaltventil 10 befindet sich in einer Offenstellung 41. Der durch den effektiven Drosselspalt 30 erzeugte Strömungswiderstand ist jedoch so groß, dass der Druck am Einlass den Ventilkörper 16 weiter weg vom Einlass 13 entgegen der Federkraft des Federelementes 21 schiebt. Der Ventilkörper 16 bewegt sich von der ersten Schließstellung 40 bis zur zweiten Schließstellung 42, in welcher der Ventilkörper 16 den Dichtring 19 kontaktiert. Wie in Fig. 7 gezeigt, legt der Ventilkörper 16 dabei den Schließweg g zurück.

Wie in Fig. 8 gezeigt, hat der Ventilkörper 16 den Schließweg g überbrückt und steht in Kontakt mit dem Dichtring 19. Das Druckabschaltventil 10 ist in der zweiten Schließstellung 42 geschlossen, da der Dichtring 19 den Ventilkörper 16 kontaktiert. Der Druck an der Hochdruckleitung 38 bzw. am Einlass 13 des Ventilgehäuses 11 wird weiter erhöht. Folglich steigt auch die auf den Ventilkörper 16 wirkende Druckkraft an, wodurch der Ventilkörper 16 weiter in Richtung zum Schaltelement 26 geschoben wird. Der Ventilkörper 16 betätigt mit seinem Kolbenfuß 22 das Schaltelement 26 und drückt dieses gegen den Schalter 28. Der Schalter 28 deaktiviert wiederum den Antriebsmotor 52 der Pumpe 51. Das Druckabschaltventil 10 befindet sich in der zweiten Schließstellung 42 (Fig. 8).

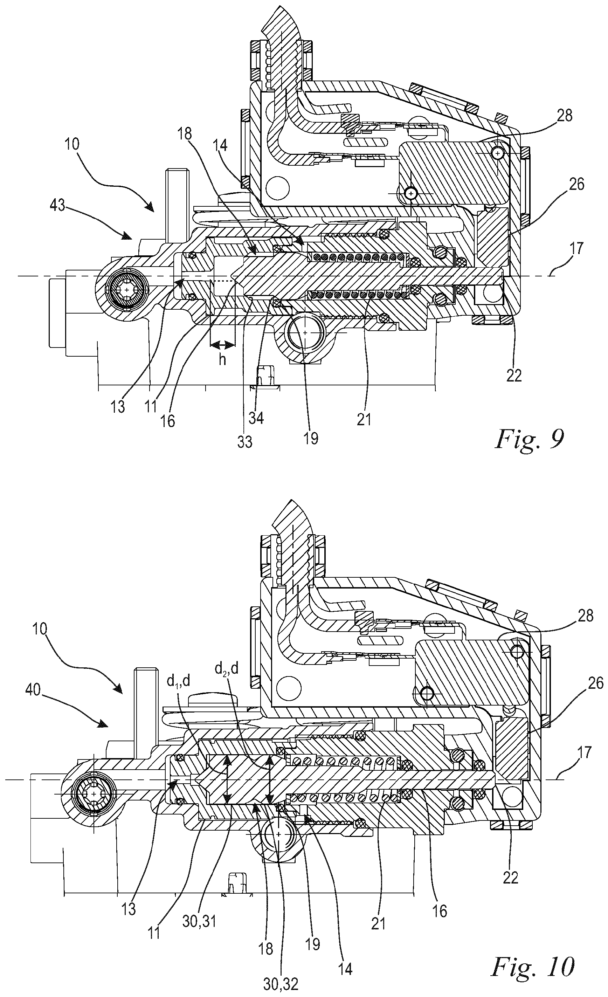

In Fig. 9 ist das Druckabschaltventil 10 in seiner Überdruckstellung 43 gezeigt. Wie bereits oben beschrieben, soll ein Druckausgleich zwischen der Hochdruckleitung 38 und der Ansaugleitung 5 erfolgen, um die mechanischen Belastungen auf die Systemkomponenten zu reduzieren. Nachdem der Ventilkörper 16 das Schaltelement 26 betätigt hat, wird dieser durch die Druckkraft weiter in Richtung weg vom Einlass des Druckabschaltventils 10 gedrückt, bis der Ventilkörper 16 die Überdruckstellung 43 erreicht. Befindet sich der Ventilkörper 16 in der Überdruckstellung 43, hat dieser von der ersten Schließstellung 40 bis zur Überdruckstellung 43 einen in Richtung der Längsachse 17 gemessenen maximalen Ventilweg h zurückgelegt. In der Überdruckstellung 43 steht der Dichtring 19 nicht mehr im Kontakt mit dem Ventilkörper 16. In dieser Stellung des Druckabschaltventils 10 liegt die Überströmungskammer 18 in Richtung der Längsachse 17 auf Höhe des Dichtrings 19, wodurch die Strömungsverbindung 12 wieder freigegeben ist. Dadurch sind die Hochdruckleitung 38 und die Ansaugleitung 5 durch das Druckabschaltventil 10 miteinander verbunden. Es erfolgt ein Druckausgleich zwischen der Hochdruckleitung 38 und der Ansaugleitung 5. Der Druck an der Hochdruckleitung 38 reduziert sich, wodurch sich die Druckkraft auf den Ventilkörper 16 wieder reduziert. Das Federelement 21 drückt den Ventilkörper 16 wieder zurück in Richtung zum Einlass 13 bis der Ventilkörper 16 den Dichtring 19 wieder kontaktiert. Es kann kein weiterer Druckausgleich mehr erfolgen. Der Ventilkörper 16 verbleibt in der zweiten Schließstellung (Fig. 8) bei deaktiviertem Antriebsmotor, bis der Bediener den Spritzaufsatz 3 wieder aktiviert.

Wie in Fig. 9 gezeigt, ist der Ventilweg h des Ventilkörpers 16 kleiner als die Gesamtlänge a des effektiven Drosselspaltes 30. Im bevorzugten Ausführungsbeispiel entspricht der Ventilweg h des Ventilkörpers 16 weniger als 90%, insbesondere weniger als 80%, vorzugsweise in etwa 75% der Gesamtlänge a des effektiven Drosselspaltes 30.

In Fig. 10 ist eine weitere Ausführung des erfindungsgemäßen Druckabschaltventils 10 gezeigt. Diese Ausführung unterscheidet sich von der in den Figuren 6 bis 9 dargestellten Ausführung lediglich in der Ausgestaltung der Durchmesser di, d₂ der Drosselspalte 31, 32. Der erste Durchmesser d₁ des ersten Drosselspaltes 31 entspricht dem zweiten Durchmesser d₂ des zweiten Drosselspaltes 32. Die Überströmungskammer 18 ist durch einen Freistich zwischen dem ersten Drosselspalt 31 und dem zweiten Drosselspalt 32 gebildet. Die Überströmungskammer 18 ermöglicht in der Überdruckstellung 43 des Druckabschaltventils 10 eine Strömungsverbindung 12 zwischen dem Einlass 13 und dem Auslass 14 des Druckabschaltventils 10. Ein Druckausgleich zwischen der Hochdruckleitung 38 und der Ansaugleitung 5 ist ermöglicht.

Wie in Fig. 7 gezeigt, weist das Druckabschaltventil 10 einen in Richtung der Längsachse 17 gemessenen Schaltweg f auf. Der Schaltweg f ist der Weg des Ventilkörpers 16, den der Ventilkörper 16 zurücklegen muss, um das Schaltelement 26 zu betätigen. Anders formuliert entspricht der Schaltweg f dem in Richtung der Längsachse 17 gemessenen Abstand zwischen dem Kolbenfuß 22 des Ventilkörpers 16 und dem Schaltelement 26 entlang der Längsachse 17. Der Schaltweg f ist vorzugsweise kürzer als die Gesamtlänge a des effektiven Drosselspaltes 30. Der Schaltweg f beträgt höchstens 50%, insbesondere höchstens 35% der Gesamtlänge a des effektiven Drosselspaltes 30.

## Patentansprüche

1. Druckabschaltventil für einen Hochdruckreiniger,
umfassend ein Ventilgehäuse (11) mit einem Ventilsitz (15), mindestens einen Einlass (13) zum Zuführen einer Flüssigkeit, mindestens einen Auslass (14) zum Abführen der Flüssigkeit und einen Ventilkörper (16) mit einer Längsachse (17), wobei der Ventilkörper (16) ein dem Ventilsitz (15) zugeordnetes Ventilglied (20) aufweist, wobei in einer ersten Schließstellung (40) des Druckabschaltventils (10) der Ventilsitz (15) durch das Ventilglied (20) verschlossen ist und die Strömungsverbindung (12) zwischen dem Einlass (13) und dem Auslass (14) unterbrochen ist,
wobei das Druckabschaltventil (10) zwischen dem Ventilgehäuse (11) und dem Ventilkörper (16) einen effektiven Drosselspalt (30) mit einer in Richtung der Längsachse (17) des Ventilkörpers (16) gemessenen Gesamtlänge (a) aufweist,
wobei der effektive Drosselspalt (30) Teil der Strömungsverbindung (12) zwischen dem Einlass (13) und dem Auslass (14) ist,
und wobei der Ventilkörper (16) einen sich radial zur Längsachse (17) erstreckenden maximalen Durchmesser (d) aufweist,
**dadurch gekennzeichnet, dass** die Gesamtlänge (a) des effektiven Drosselspalts (30) in der ersten Schließstellung (40) des Druckabschaltventils (10) mindestens 50% des maximalen Durchmessers (d) des Ventilkörpers (16) beträgt, und dass der Ventilkörper (16) und/oder das Ventilgehäuse aus Kunststoff bestehen.

2. Druckabschaltventil nach Anspruch 1,
**dadurch gekennzeichnet, dass** der effektive Drosselspalt (30) eine radial zur Längsachse (17) des Ventilkörpers (16) gemessene Spalthöhe (e) besitzt, wobei die Spalthöhe (e) höchstens 0,25 mm, insbesondere höchstens 0,2 mm beträgt.

3. Druckabschaltventil nach Anspruch 1 oder 2,
**dadurch gekennzeichnet, dass** der effektive Drosselspalt (30) einen ersten Drosselspalt (31) mit einem ersten Durchmesser (d₁) und einen zweiten Drosselspalt (32) mit einem zweiten Durchmesser (d₂) umfasst.

4. Druckabschaltventil nach Anspruch 3,
**dadurch gekennzeichnet, dass** zwischen dem ersten Drosselspalt (31) und dem zweiten Drosselspalt (32) zwischen dem Ventilkörper (16) und dem Ventilgehäuse (11) eine Überströmungskammer (18) vorgesehen ist.

5. Druckabschaltventil nach Anspruch 3 oder 4,
**dadurch gekennzeichnet, dass** der erste Durchmesser (d₁) des ersten Drosselspaltes (31) kleiner ist als der zweite Durchmesser (d₂) des zweiten Drosselspaltes (32).

6. Druckabschaltventil nach einem der Ansprüche 3 oder 4,
**dadurch gekennzeichnet, dass** der erste Durchmesser (d₁) des ersten Drosselspaltes (31) in etwa dem zweiten Durchmesser (d₂) des zweiten Drosselspaltes (32) entspricht.

7. Druckabschaltventil nach einem der Ansprüche 3 bis 6,
**dadurch gekennzeichnet, dass** der zweite Drosselspalt (32) ein von dem ersten Drosselspalt (31) abgewandtes Ende aufweist, an dem sich ein in Richtung der Längsachse (17) verjüngender Abschnitt (27) des Ventilkörpers (16) anschließt.

8. Druckabschaltventil nach einem der Ansprüche 1 bis 7,
**dadurch gekennzeichnet, dass** das Ventilglied (20) des Ventilkörpers (16) in Richtung zum Ventilsitz (15) des Ventilgehäuses (11) konisch ausgebildet ist.

9. Druckabschaltventil nach einem der Ansprüche 1 bis 8,
**dadurch gekennzeichnet, dass** das Druckabschaltventil (10) ein auf den Ventilkörper (16) wirkendes Federelement (21) umfasst, wobei das Federelement (21) den Ventilkörper (16) gegen den Ventilsitz (15) des Ventilgehäuses (11) spannt.

10. Druckabschaltventil nach einem der Ansprüche 1 bis 9,
**dadurch gekennzeichnet, dass** das Druckabschaltventil (10) eine Offenstellung (41), eine zweite Schließstellung (42) und eine Überdruckstellung (43) aufweist, wobei in der Überdruckstellung (43) der Einlass (13) und der Auslass (14) des Ventilgehäuses (11) strömungsverbunden sind.

11. Druckabschaltventil nach Anspruch 10,
**dadurch gekennzeichnet, dass** das Druckabschaltventil (10) derart ausgebildet ist, dass bei Überdruck am Einlass (14) des Ventilgehäuses (11) der Ventilkörper (16) entlang der Längsachse (17) in Richtung weg vom Einlass (13) gedrückt wird, wodurch das Druckabschaltventil (10) von der zweiten Schließstellung (42) in die Überdruckstellung (43) übergeht.

12. Druckabschaltventil nach Anspruch 10 oder 11,
**dadurch gekennzeichnet, dass** das Druckabschaltventil (10) einen in Richtung der Längsachse (17) gemessenen maximalen Ventilweg (h) aufweist, den der Ventilkörper (16) von der ersten Schließstellung (40) bis zur Überdruckstellung (43) zurücklegt, und dass der Ventilweg (h) des Ventilkörpers (16) kleiner als die Gesamtlänge (a) des effektiven Drosselspaltes (30) ist.

13. Druckabschaltventil nach Anspruch 12,
**dadurch gekennzeichnet, dass** der Ventilweg (h) des Ventilkörpers (16) höchstens 90%, insbesondere höchstens 80%, vorzugsweise in etwa 75% der Gesamtlänge (a) des effektiven Drosselspaltes (30) entspricht.

14. Druckabschaltventil nach einem der Ansprüche 1 bis 13,
**dadurch gekennzeichnet, dass** der Ventilkörper (16) und/oder das Ventilgehäuse aus Polyoxymethylen (POM) bestehen.

15. Hochdruckreiniger mit einem Druckabschaltventil nach einem der Ansprüche 1 bis 14.

## Claims

1. Pressure shutoff valve for a pressure washer,
comprising a valve housing (11) with a valve seat (15), at least one inlet (13) for supplying a liquid, at least one outlet (14) for removing the liquid, and a valve body (16) with a longitudinal axis (17), wherein the valve body (16) has a valve member (20) assigned to the valve seat (15), wherein, in a first closed position (40) of the pressure shutoff valve (10), the valve seat (15) is closed by the valve member (20) and the flow connection (12) between the inlet (13) and the outlet (14) is interrupted,
wherein the pressure shutoff valve (10) has an effective throttle gap (30) with an overall length (a), as measured in the direction of the longitudinal axis (17) of the valve body (16), between the valve housing (11) and the valve body (16),
wherein the effective throttle gap (30) is part of the flow connection (12) between the inlet (13) and the outlet (14),
and wherein the valve body (16) has a maximum diameter (d) extending radially with respect to the longitudinal axis (17),
**characterized in that** the overall length (a) of the effective throttle gap (30) is at least 50% of the maximum diameter (d) of the valve body (16) in the first closed position (40) of the pressure shutoff valve (10), and **in that** the valve body (16) and/or the valve housing are composed of plastic.

2. Pressure shutoff valve according to Claim 1,
**characterized in that** the effective throttle gap (30) has a gap height (e), as measured radially with respect to the longitudinal axis (17) of the valve body (16), wherein the gap height (e) is at most 0.25 mm, in particular at most 0.2 mm.

3. Pressure shutoff valve according to Claim 1 or 2,
**characterized in that** the effective throttle gap (30) comprises a first throttle gap (31) with a first diameter (d₁) and a second throttle gap (32) with a second diameter (d₂).

4. Pressure shutoff valve according to Claim 3,
**characterized in that,** between the first throttle gap (31) and the second throttle gap (32), an overflow chamber (18) is provided between the valve body (16) and the valve housing (11).

5. Pressure shutoff valve according to Claim 3 or 4,
**characterized in that** the first diameter (d₁) of the first throttle gap (31) is smaller than the second diameter (d₂) of the second throttle gap (32).

6. Pressure shutoff valve according to either of Claims 3 or 4,
**characterized in that** the first diameter (d₁) of the first throttle gap (31) approximately corresponds to the second diameter (d₂) of the second throttle gap (32).

7. Pressure shutoff valve according to any of Claims 3 to 6,
**characterized in that** the second throttle gap (32) has an end which faces away from the first throttle gap (31) and which is adjoined by a section (27) of the valve body (16) that is tapered in the direction of the longitudinal axis (17).

8. Pressure shutoff valve according to any of Claims 1 to 7,
**characterized in that** the valve member (20) of the valve body (16) is conical in the direction of the valve seat (15) of the valve housing (11).

9. Pressure shutoff valve according to any of Claims 1 to 8,
**characterized in that** the pressure shutoff valve (10) comprises a spring element (21) acting on the valve body (16), wherein the spring element (21) tensions the valve body (16) against the valve seat (15) of the valve housing (11).

10. Pressure shutoff valve according to any of Claims 1 to 9,
**characterized in that** the pressure shutoff valve (10) has an open position (41), a second closed position (42) and an overpressure position (43), wherein, in the overpressure position (43), the inlet (13) and the outlet (14) of the valve housing (11) are connected in terms of flow.

11. Pressure shutoff valve according to Claim 10,
**characterized in that** the pressure shutoff valve (10) is designed in such a manner that, in the event of overpressure at the inlet (14) of the valve housing (11), the valve body (16) is pressed along the longitudinal axis (17) in a direction away from the inlet (13), as a result of which the pressure shutoff valve (10) passes from the second closed position (42) into the overpressure position (43).

12. Pressure shutoff valve according to Claim 10 or 11,
**characterized in that** the pressure shutoff valve (10) has a maximum valve path (h) as measured in the direction of the longitudinal axis (17) and which the valve body (16) covers from the first closed position (40) as far as the overpressure position (43), and **in that** the valve path (h) of the valve body (16) is smaller than the overall length (a) of the effective throttle gap (30).

13. Pressure shutoff valve according to Claim 12,
**characterized in that** the valve path (h) of the valve body (16) corresponds at most to 90%, in particular at most to 80%, preferably to approximately 75% of the overall length (a) of the effective throttle gap (30).

14. Pressure shutoff valve according to any of Claims 1 to 13,
**characterized in that** the valve body (16) and/or the valve housing are composed of polyoxymethylene (POM).

15. Pressure washer with a pressure shutoff valve according to any of Claims 1 to 14.

## Revendications

1. Soupape de coupure de pression pour un nettoyeur haute pression,
comprenant un boîtier de soupape (11) avec un siège de soupape (15), au moins une entrée (13) pour l'amenée d'un liquide, au moins une sortie (14) pour l'évacuation du liquide et un corps de soupape (16) avec un axe longitudinal (17), le corps de soupape (16) présentant un organe de soupape (20) associé au siège de soupape (15), le siège de soupape (15) étant fermé par l'organe de soupape (20) dans une première position de fermeture (40) de la soupape (10) de coupure de pression et la communication d'écoulement (12) entre l'entrée (13) et la sortie (14) étant interrompue,
la soupape (10) de coupure de pression présentant, entre le boîtier de soupape (11) et le corps de soupape (16), un interstice d'étranglement effectif (30) d'une longueur totale (a) mesurée dans la direction de l'axe longitudinal (17) du corps de soupape (16), l'interstice d'étranglement effectif (30) faisant partie de la communication d'écoulement (12) entre l'entrée (13) et la sortie (14),
et le corps de soupape (16) présentant un diamètre maximal (d) s'étendant radialement par rapport à l'axe longitudinal (17),
**caractérisée en ce que** la longueur totale (a) de l'interstice d'étranglement effectif (30) dans la première position de fermeture (40) de la soupape (10) de coupure de pression représente au moins 50% du diamètre maximal (d) du corps de soupape (16), et **en ce que** le corps de soupape (16) et/ou le boîtier de soupape sont en matière plastique.

2. Soupape de coupure de pression selon la revendication 1,
**caractérisée en ce que** l'interstice d'étranglement effectif (30) présente une hauteur d'interstice (e) mesurée radialement par rapport à l'axe longitudinal (17) du corps de soupape (16), la hauteur d'interstice (e) étant au maximum de 0,25 mm, en particulier au maximum de 0,2 mm.

3. Soupape de coupure de pression selon la revendication 1 ou la revendication 2, **caractérisée en ce que** l'interstice d'étranglement effectif (30) comprend un premier interstice d'étranglement (31) avec un premier diamètre (d₁) et un deuxième interstice d'étranglement (32) avec un deuxième diamètre (d₂).

4. Soupape de coupure de pression selon la revendication 3,
**caractérisée en ce qu'une** chambre de débordement (18) est prévue entre le premier interstice d'étranglement (31) et le deuxième interstice d'étranglement (32) entre le corps de soupape (16) et le boîtier de soupape (11).

5. Soupape de coupure de pression selon la revendication 3 ou la revendication 4, **caractérisée en ce que** le premier diamètre (d₁) du premier interstice d'étranglement (31) est plus petit que le deuxième diamètre (d₂) du deuxième interstice d'étranglement (32).

6. Soupape de coupure de pression selon l'une des revendications 3 ou 4, **caractérisée en ce que** le premier diamètre (d₁) du premier interstice d'étranglement (31) est sensiblement égal au deuxième diamètre (d₂) du deuxième interstice d'étranglement (32).

7. Soupape de coupure de pression selon l'une des revendications 3 à 6,
**caractérisée en ce que** le deuxième interstice d'étranglement (32) présente une extrémité opposée au premier interstice d'étranglement (31), à laquelle se raccorde une section (27) du corps de soupape (16) qui se rétrécit en direction de l'axe longitudinal (17).

8. Soupape de coupure de pression selon l'une des revendications 1 à 7,
**caractérisée en ce que** l'organe de soupape (20) du corps de soupape (16) est de forme conique en direction du siège de soupape (15) du boîtier de soupape (11).

9. Soupape de coupure de pression selon l'une des revendications 1 à 8,
**caractérisée en ce que** la soupape (10) de coupure de pression comprend un élément ressort (21) agissant sur le corps de soupape (16), l'élément ressort (21) pressant le corps de soupape (16) contre le siège de soupape (15) du boîtier de soupape (11).

10. Soupape de coupure de pression selon l'une des revendications 1 à 9,
**caractérisée en ce que** la soupape (10) de coupure de pression présente une position ouverte (41), une deuxième position fermée (42) et une position de surpression (43), l'entrée (13) et la sortie (14) du corps de soupape (11) étant en communication fluidique dans la position de surpression (43).

11. Soupape de coupure de pression selon la revendication 10,
**caractérisée en ce que** la soupape (10) de coupure de pression est conçue de telle sorte qu'en cas de surpression à l'entrée (14) du corps de soupape (11), le corps de soupape (16) est pressé le long de l'axe longitudinal (17) dans la direction opposée à l'entrée (13), ce qui fait passer la soupape (10) de coupure de pression de la deuxième position de fermeture (42) à la position de surpression (43).

12. Soupape de coupure de pression selon la revendication 10 ou la revendication 11,
**caractérisée en ce que** la soupape (10) de coupure de pression présente une course de soupape maximale (h), mesurée dans la direction de l'axe longitudinal (17), que le corps de soupape (16) parcourt de la première position de fermeture (40) à la position de surpression (43), et **en ce que** la course de soupape (h) du corps de soupape (16) est inférieure à la longueur totale (a) de l'interstice d'étranglement effectif (30).

13. Soupape de coupure de pression selon la revendication 12,
**caractérisée en ce que** la course de soupape (h) du corps de soupape (16) correspond au maximum à 90%, en particulier au maximum à 80%, de préférence à environ 75% de la longueur totale (a) de l'interstice d'étranglement effectif (30).

14. Soupape de coupure de pression selon l'une des revendications 1 à 13,
**caractérisée en ce que** le corps de soupape (16) et/ou le boîtier de soupape sont en polyoxyméthylène (POM).

15. Nettoyeur haute pression équipé d'une soupape de coupure de pression selon l'une des revendications 1 à 14.
